(19) Europäisches Patentamt
European Patent Office
Office européen des brevets

(11) Publication number: 0 098 698
B1

(12) EUROPEAN PATENT SPECIFICATION

(45) Date of publication of patent specification: 16.09.87

(21) Application number: 83303408.5

(22) Date of filing: 13.06.83

(51) Int. Cl.$^4$: C 08 L 71/00, C 08 G 65/00, C 09 J 7/02, C 09 D 3/48

(54) **Composite low surface energy liner of perfluoropolyether.**

(30) Priority: 02.07.82 US 394534

(43) Date of publication of application: 18.01.84 Bulletin 84/03

(45) Publication of the grant of the patent: 16.09.87 Bulletin 87/38

(84) Designated Contracting States: BE CH DE FR GB IT LI NL SE

(56) References cited:
EP-A-0 040 923
GB-A-2 019 254
US-A-4 085 137

(73) Proprietor: MINNESOTA MINING AND MANUFACTURING COMPANY
3M Center, P.O. Box 33427
St. Paul, Minnesota 55133-3427 (US)

(72) Inventor: Larson, James M., c/o Minnesota Mining & Manuf.Co.
2501 Hudson Road, P.O.Box 33427
St. Paul, MN 55133 (US)
Inventor: Noreen, Allen L., c/o Minnesota Mining & Manuf.Co.
2501 Hudson Road, P.O.Box 33427
St. Paul, MN 55133 (US)

(74) Representative: Baillie, Iain Cameron et al
c/o Ladas & Parry Isartorplatz 5
D-8000 München 2 (DE)

EP 0 098 698 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Technical Field

This invention concerns low surface energy liners having protective, release, or lubricating function, e.g., low-adhesion backsize coatings that permit pressure-sensitive adhesive tapes to be wound upon themselves for storage and later unwound to be put to use.

Background Art

Pressure-sensitive adhesive tape which is wound upon itself in roll form has a low-adhesion backsize coating to permit the tape to be unwound without delaminating. If the tape is not wound upon itself, its adhesive is customarily protected by a disposable web which likewise has a low-adhesion coating. Any such low-adhesion coating must both adhere strongly to its underlying substrate and be sufficiently cohesive not to contaminate the adhesive, i.e., not to interfere unduly with its adhesiveness. Low-adhesion backsize coatings are disclosed in U.S. Patents No. 3,318,852, 3,536,749, 4,057,596 and 4,216,252.

Certain pressure-sensitive adhesives are so aggressively tacky that tapes require undesirably high peel forces to be removed from known low-adhesion backsize coatings, especially after prolonged storage. Such tapes may carry away and thus be contaminated by appreciable amounts of the low-adhesion material. It is believed that no release coating of the prior art is fully effective for use with aggressively tacky poly(dimethylsiloxane) pressure-sensitive adhesives.

The need for improved low-adhesion coatings is especialy acute for pressure-sensitive adhesive tapes having porous backings such as breathable medical tapes. When such tapes are wound upon themselves into roll form, the pressure-sensitive adhesive may gradually flow into the pores of the backing and thus create a mechanical bond that may cause the adhesive layer to split upon unwinding unless the low-adhesion backsize is exceedingly effective. For some such tapes, it has been necessary to employ a nonporous, disposable, low-adhesion web, the cost of which could have been avoided if a better low-adhesion backsize coating were available.

Pressure-sensitive adhesive transfer tapes which are marketed in roll form usually have a carrier web having low-adhesion coatings on both surfaces, one of which provides a lower unwinding force so that the adhesive layer remains on the carrier web during unwinding. If the pressure-sensitive adhesive is highly aggressive, the low-adhesion coating which is to provide the higher unwinding force must accomplish the aforementioned objectives, and the low-adhesion coating which is to provide the lower unwinding·force must be even more effective.

Coatings comparable to low-adhesion backsize coatings have other uses, e.g., nonstick coatings for cooking utensils, ice-releasing coatings for aircraft, and lubricative coatings for magnetic recording media. Such low-adhesion coatings are sometimes called "release coatings", a term which also encompasses release agents for molds, which may be effective only by failing cohesively. Lubricants usually function by cohesive failure. To distinguish release coatings which are designed to fail cohesively from those which are designed to resist cohesive failure, the latter are here called "liners" and more specifically, "low-energy liners" because low energy is important to their effectiveness.

In specification EP—A—40923 there is disclosed a structure for use in image transfer in which there is a surface formed from a film-forming polymer, cross-linking agent and a low proportion of a polyfluorinated acrylate compound. There is no disclosure of a composite structure having a distinct outer layer containing at least 75% by weight of segments of a perfluoropolyether. There is disclosure of migration of the fluoroacrylate molecules but to discussion of formation of a distinct composite structure and there is no teaching relevant to liners which are appropriate for pressure-sensitive tape.

Disclosure of Invention

The present invention provides a low surface energy liner which is effective as a low-adhesion coating for use with the most aggressive pressure-sensitive adhesives without unduly diminishing their adhesiveness.

Briefly, the present invention comprises a substrate having a composite liner provided by

an inner layer of insoluble polymer made from polymerizable film-forming monomer having a polymerizable functionality greater than 1, and

an outer layer of insoluble polymer made from a polymerizable film-forming monomer copolymerizable with the monomer of said inner layer and having a perfluoropolyether segment which is a plurality of polyalkylene oxide, $-C_aF_{2a}O-$, repeating units, where subscript a in each such unit is independently an integer from 1 to 4, which segment preferably has a number average molecular weight of 500 to 20,000 the perfluoropolyether segments making up at least 75 weight per cent of the outer layer.

Said monomers are *in-situ* polymerized, apparently the contiguous monomers of the 2 layers copolymerizing, thus bonding the perfluoropolyether segments to the substrate through the inner layer.

By polymerizing both layers in their contiguous relationship, the perfluoropolyether segments have significantly greater adherence to the substrate than they would have had the perfluoropolyether monomer been applied directly to the substrate and then polymerized *in-situ*. By virtue of that greater adhesion, the low surface energy liner not only better resists transfer if used as a low-adhesion coating for a pressure-sensitive adhesive, but it becomes highly resistant to removal when subjected to abrasion. Even though the

total thickness of the composite may be ultra-thin, the adhered perfluoropolyether provides a barrier or liner which prevents the most aggressive pressure-sensitive adhesives from becoming appreciably bonded to the underlying substrate, even after prolonged storage.

The composite low surface energy liner of the invention may be applied to a substrate by the steps of

(a) coating onto the substrate a first dilute solution of said inner layer monomer to provide an inner coating of monomer,

(b) coating over the coating of step (a) a second dilute solution of said perfluoropolyether monomer thus providing an outer coating,

(c) drying the coatings (to remove solvent) and polymerizing said monomers (which are preferably addition polymerizable), thus bonding the perfluoropolyether segments to the substrate through the inner layer.

When the perfluoropolyether monomer has polymerizable groups containing ethylenic unsaturation such as acryloyl and the monomer of the inner coating has ethylenic unsaturation, polymerization can be effected by ultraviolet radiation, preferably in an inert atmosphere. Preferably there is a photoactive agent in the inner coating, and generally one is necessary in both coatings when the perfluoropolyether monomer has polymerizable groups other than acryloyl. Usually the whole process can be carried out in-line, but some difficulty has been encountered in obtaining a sufficiently inert atmosphere when the outer coating has a thickness greater than 200 nm.

When the perfluoropolyether monomer has hydrolyzable silane, epoxy, or isocyanate polymerizable groups, thermal polymerization can be employed by exposing the coated substrate to thermal radiation in the presence of a polymerization catalyst. When the polymerizable groups are epoxy, ultraviolet radiation may be employed in air in the presence of an aromatic onium salt polymerization catalyst such as diphenyliodonium hexafluoroantimonate or triphenylsulfonium hexafluoroantimonate, incorporated into the coating solution.

The polymers of the inner and outer layers are insoluble, that is, crosslinked, the polymer of the inner layer being insoluble at 20°C in common organic solvents, e.g. methyl ethyl ketone, and the polymer of the outer being insoluble at 20°C in 1,1,2-trichloro-2,2,1-trifluoroethane ("Freon" 113).

The thickness of the low surface energy liner is conveniently controlled by the proportion of solvent in the two dilute solutions. Coating techniques useful for in-line processing include brushing, wire or knife coating, spraying, curtain coating and gravure coating. Curtain coating permits essentially simultaneous application of both solutions. If the coating technique used for applying the second solution involves mechanical contact of the inner layer coating e.g., gravure coating, the inner layer coating preferably is first dried or partially polymerized to develop some abrasion resistance before applying the second solution, and the solvent of the second solution should not be a solvent for the material deposited from the first solution.

The thickness of the inner layer may range from about 10 nm to 0.5 mm. Toward the higher end of that range, the composite low surface energy liner may have better resistance to abreasion, but for some uses it is preferred that the low surface energy liners be as thin as possible, e.g., when used as protective lubricating coatings for magnetic recording media, it being desirable to miminimize the spacing between the heads and the magnetizable material of the recording media. Generally the outer layer should be thin, e.g., less than 500 nm, preferably less than 100 nm, because of the polyfluoropolyether monomer is exceedingly expensive, and it may be as thin as 5 or 10 nm. On the other hand, the outer layer can be thicker than 500 nm for some uses.

Suitable perfluoropolyether monomers for making the low surface energy liner of the invention have the formula

$$Q-(C_aF_{2a}O)_k-C_aF_{2a}-Z \qquad (A)$$

wherein Q comprises a polymerizable group attached to a chain of randomly distributed perfluoroalkylene oxide, $-C_aF_{2a}O-$, repeating units, in each of which a is independently an integer of 1 to 4, k is the number of such repeating units and it has a value from 1 to 300 such that the segment preferably has a number average molecular weight of 500 to 20,000, and Z is $-OC_aF_{2a+1}$ or Q. If Z is not Q, it preferably is $-OCF_3$, $-OCF_2CF_3$, or $-OCF(CF_3)F_3$. Typically the perfluoroalkylene oxide units will be $-CF_2O-$, $-C_2F_4O-$, and/or $C_3F_6O-$.

It is preferred that the perfluoropolyether monomers have functionalities within the range of 1.5 to 2.0 in order to provide covalent bonding at both ends of most of the segments.

Preferred perfluoropolyether monomers are the ethylenically-unsaturated monomers disclosed in U.S. Patent No. 3,810,874 (Mitsch et al.) and U.S. Patent No. 4,321,404 (Williams et al.) wherein Q of the above Formula A is selected from

(a) 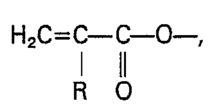 , (b) 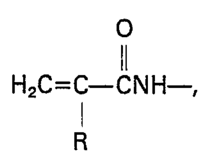 ,

(c) 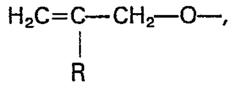 and (d) 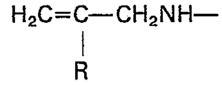

where R is hydrogen or methyl.

These preferred ethylenically-unsaturated perfluoropolyether monomers which have the formula

$$Q{-}CF_2O(CF_2CF_2O)_m(CF_2O)_nCF_2{-}Q \qquad (B)$$

wherein Q is as defined above and m and n designate the number of randomly distributed perfluoro-ethyleneoxy and perfluoromethyleneoxy backbone repeating units, respectively, n and m having independently values, for example from 1 to 200, and the ratio m/n is 0.2/1 to 5/1.

Examples of polymerizable perfluoropolyether monomers of Formula A useful for making the low surface energy liner of the invention are those of the following where here again, as elsewhere the perfluoroalkylene oxide units are randomly distributed, the given numbers of which are average values.

Perfluoropolyether Monomer

I 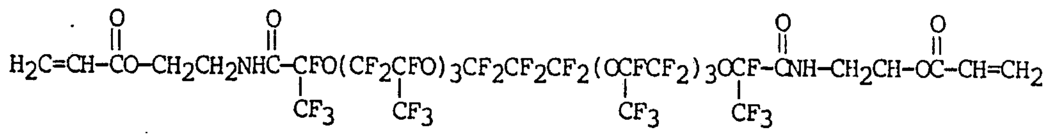

II 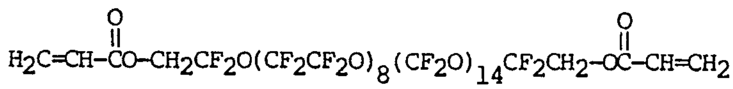

III 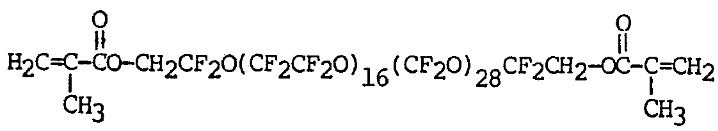

IV $H_2C{=}CHCH_2OCH_2CF_2O(CF_2CF_2O)_{16}(CF_2O)_{28}CF_2CH_2OCH_2CH{=}CH_2$

V 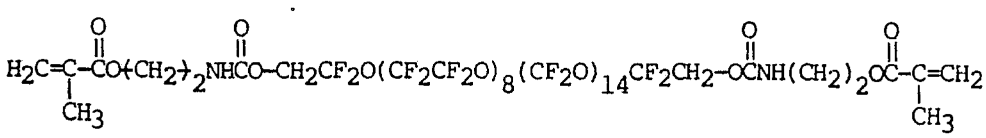

VI 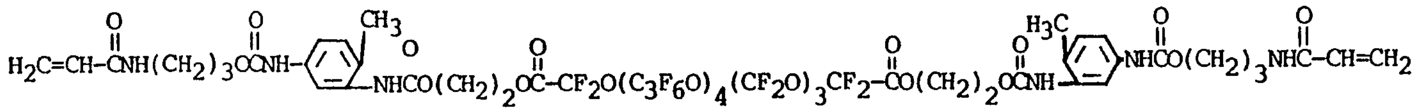

VII 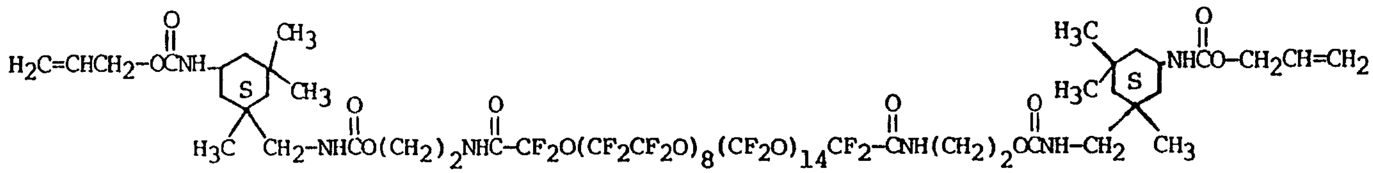

VIII 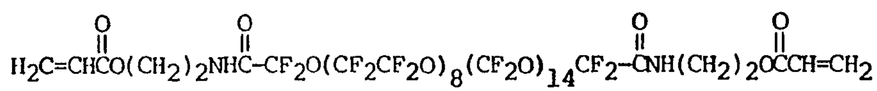

IX 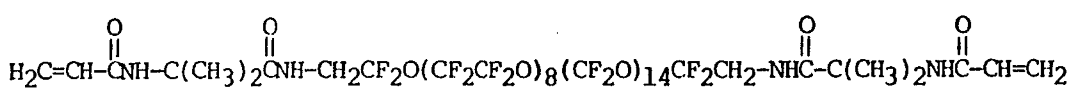

X 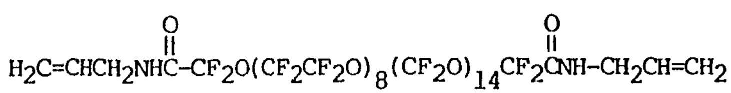

XI 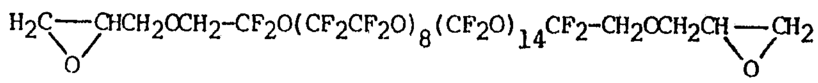

XII 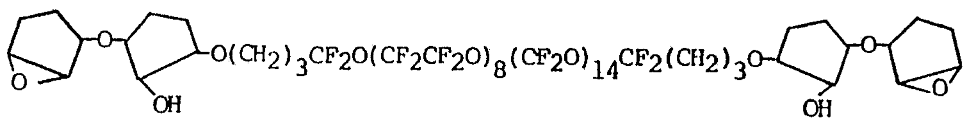

XIII 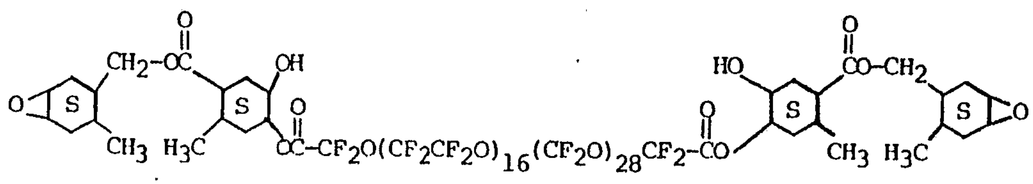

XIV 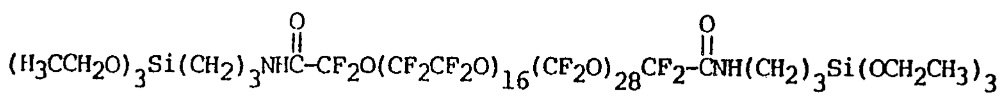

XV 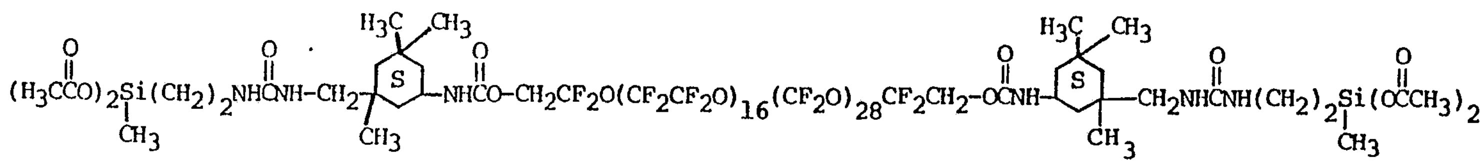

XVI 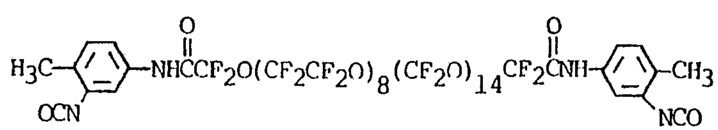

Further description of such monomers, and their preparation, will be omitted in the interest of brevity, the disclosure of said U.S. Patent Nos. 3,810,874 and 4,321,404 being incorporated herein for such purposes.

In making a low surface energy liner of the invention, one or more other types of copolymerizable monomers with the perfluoropolyether monomer may be dissolved into the solution in amounts providing up to about 20% by weight of the low-energy liner. However, the amount of the perfluoropolyether monomer is such that at least 75% of the weight of the outer layer of the liner is provided by perfluoropolyether segments. When the perfluoropolyether monomer has polymerizable groups which are ethylencially unsaturated, useful copolymerizable monomers include acrylic and methacrylic esters, amides, and urethanes, and vinyl ethers, epoxides, and heterocycles.

When Q of Formulae A or B is a 1,2-epoxy group, useful copolymerizable monomers include 1,2-epoxy-substituted esters, ethers, siloxanes, and nitriles such as listed in columns 3 and 4 of U.S. Patent No. 4,219,377.

When Q of Formulae A or B is a hydrolyzable silane group, useful copolymerizable monomers include silanes which may be linear or cyclic and may have alkoxy, halo, cyano, aceto, methacryloxy, lower alkenyl, or phenyl substituents.

When Q of Formulae A or B is an isocyanato group, useful copolymerizable monomers include isocyanates, polyols, and polyamines.

Suitable monomers for use in making the inner layer of the composite, low surface energy liners of the invention are one or more of any film-forming polymerizable monomers containing at least two polymerizable groups (preferably those having ethylenic unsaturation) at least one of which is copolymerizable with that of the monomer used to make the outer layer. Examples of such inner layer monomers are the acrylate and methacrylate esters of alkanepolyols such as 1,6-hexamethylene diacrylate (here called "Inner Layer Monomer A"), pentaerythritol triacrylate (here called "Inner Layer Monomer B"), pentaerythritol tetracrylate (here called "Inner Layer Monomer C"), trimethylolpropane triacrylate (here called "Inner Layer Monomer D"), and dipentaerythritol pentaacrylate (here called "Inner Layer Monomer E"); 1,3,5-tris(2-methacryloyloxyethyl)-*s*-triazine (here called "Inner Layer Monomer F"); polyesterpolyol acrylate and methacrylates such as

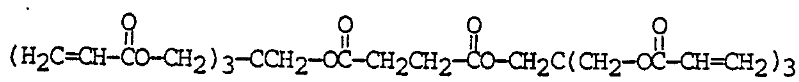

other polyester acrylates and methacrylates as disclosed in U.S. Patent No. 4,050,936, the heterocyclic polyol acrylates and methacrylates such as

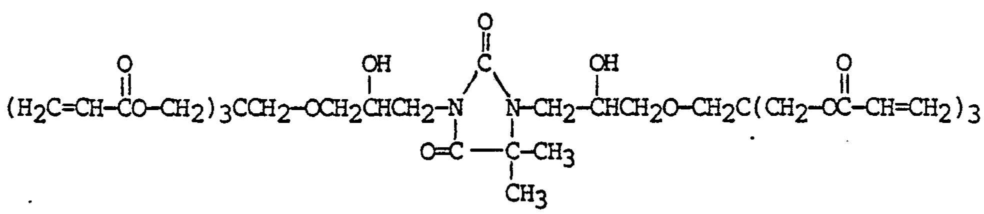

(here called "Inner Layer Monomer G"), 1,3-bis[3-(2-acryloyloxyethoxy)-2-hydropropyl]-5,5-dimethyl-2,4-imidazolidinedione (here called "Inner Layer H"), glycidyl methacrylate, isocyanatoethylmethacrylate, those monomers described in U.S. Patent No. 4,306,954, and 3-methacryloxypropyltrimethoxysilane; tris(2-methoxyethoxy)vinylsilane; 3,4-epoxycyclohexylmethyl-3,4-epoxycyclohexanecarboxylate; and diallyl phthalate.

Example 1

A methyl ethyl ketone solution containing 4.75 parts of a 20/80 mixture of pentaerythritol tetracrylate and Inner Layer Monomer G and 0.25 part 2,4-bis(trichloromethyl)-6-(4-methoxyphenyl)-*s*-triazine was coated onto 0.074 mm poly(ethyleneterephthalate) film using a wire-wound rod. After allowing the solvent to evaporate to give a calculated dry thickness of 0.35 micrometer, this coating was partially cured by one pass through an ultraviolet processor (PPG Industries, model No. QC 1202 AN 3IR) at 61 m/min under an air atmosphere using two medium-pressure mercury lamps at 40 w/cm each. The coating was cured to the point that it was not marked by light pressure with a cotton swab. perfluoropolyether monomer II was coated onto this partially cured coating from a 0.5% solution in 1,1,2-trichloro-2,2,1-trifluoroethane ("Freon" 113) using a wire-wound rod. After allowing the solvent to evaporate to give a calculated dry thickness of 34 nm, this was passed once through the ultravoilet processor at 31 m/min. under a nitrogen atmosphere using two lamps at 80 w/cm each, thus polymerizing the coatings to provide a composite low surface energy liner of the invention.

The above-prepared liner was evaluated by subjecting it to various tests (which were also used in subsequent examples).

In the "Release Peel Force, Type A Test", a poly(dimethylsiloxane) [DC 355 from Dow Corning which comes as a 18.5% solution in "Freon" 113] was coated onto this composite low surface energy liner using a knife coater and allowed to dry for 2 hours to provide an aggressive pressure-sensitive adhesive layer having a thickness of 0.038 mm. To the adhesive surface was laminated 0.038 mm poly(ethyleneterephthalate) film. After aging the sample at 70°C (dry heat) for 14 days, the sample was allowed to cool to 22°C. The Release Peel Force required to remove the silicone pressure-sensitive adhesive from the low surface energy liner was measured by peeling off the poly(ethyleneterephthalate) film at an angle of 180°C and a peel rate of 2.3 m/min.

In the "Readhesion Peel Force Test", the removed piece of silicone pressure-sensitive adhesive tape was then applied to a clean glass plate and the peel force for its removal measure at a peel rate of 2.3 m/min. and a peel angle of 180°.

In the "Control Peel Force Test", the readhesion value was compared to that obtained from a piece of the silicone pressure-sensitive adhesive tape which had not contacted any surface.

In the "Durability Test", coating durability was determined using a Tabler Abraser (from Teledyne Taber, model 503) equipped with CS—O rubber wheels and a 1-kg load. Complete wet-out by the ink from a marking pen (Berol Eagle Marker 8835, black) on the rubbed area was the end point used to indicate substantially complete removal of the coating.

Results from the foregoing tests were:

| | |
|---|---|
| Release Peel Force, Type A | 0.6 N/dm |
| Readhesion Peel Force | 47 N/dm |
| Control Peel Force | 76—79 N/dm |
| Durability | 1100—1200 cycles |

Comparative Example 1

Results for a case identical to Example 1 except that perfluoropolyether Monomer II was coated directly onto 0.07 mm poly(ethyleneterephthalate) film were:

| | |
|---|---|
| Release Peel Force, Type A | 0.8 N/dm |
| Readhesion Peel Force | 30 N/dm |
| Control Peel Force | 76—79 N/dm |
| Durability | 80—120 cycles |

Examples 2—9

A number of composite low surface energy liners of the invention were made in the same way as in Example 1 except as indicated in Table A, but in testing, a different type of test was made to determine Release Peel Force. In this test, "Release Peel Force, Type B", a roll of pressure-sensitive adhesive tape was used having an aggressive poly(dimethylsiloxane) pressure-sensitive adhesive (Dow Corning DC 284), 0.025 mm in thickness. Its backing was biaxially-oriented poly(ethyleneterephthalate) film 0.038 mm in thickness and had no backsize coating. The adhesive layer of a piece of the tape was pressed against the low surface energy liner using a smooth plastic bar. After simulated aging (70°C for 24 hours) and cooling to 22°C, the underlying film was pressed against a layer of pressure-sensitive adhesive carried by a rigid plate, thus rigidifying the low surface energy liner. The test tape was thgen peeled back at an angle of 180° and at 2.3 m/min., and the peelback force was measured after the peeling had begun.

Readhesion and Control Peel Forces were determined as in Example 1.

TABLE A

| Example | Inner Layer Monomer | UV Procesor Speed (m/min) | Peel Forces (N/dm) Release | Readhesion | Control | Durability (cycles) |
|---|---|---|---|---|---|---|
| 2 | H | 43 | 0.6 | 36—43 | 45 | 400—500 |
| 3 | A | 24[a] | 10 | 36—43 | 45 | 2500—2600 |
| 4 | D | 43[a] | 31 | 31—45 | 45 | 600—650 |
| 5 | B | 49[a,b] | 0.6 | 47 | 45 | 1200—1300 |
| 6 | F | 91[a,b] | 0.6 | 43 | 45 | 400—500 |
| 7 | C | 55[a,b] | 0.6 | 47 | 45 | 1600—1700 |
| 8 | E | 91[a,b] | 0.6 | 44 | 45 | 1600—1700 |

a Same as in Example 1 except that inner layer was first partially photocured in a nitrogen atmosphere instead of an air atmosphere.
b Same as in Example 1 except that used only one lamp at 40 w/cm.

Examples 9—11

A number of composite low surface energy liners of the invention were made and tested in the same way as in Example 1 except as indicated in Table B. Additionally comparative liners (denoted by a number followed by "C"), were made by coating the same perfluoropolyether directly onto 0.074 mm poly(ethyleneterephthalate) and testing the comparative liners. Results were:

TABLE B

| Ex. | Formula of Perfluoro polyether used | Outer Layer Thickness (nm) | Peel Forces (N/dm) Release* | Readhesion | Control | Durability (cycles) |
|---|---|---|---|---|---|---|
| 9** | V | 14 | 12.4 | 38 | 39—42 | 300 |
| 9C** | V | 14 | 15 | 34 | 39—42 | 15 |
| 10 | X | 68 | 0.4—1.2 | 43—45 | 39—42 | 1700—2000 |
| 10C | X | 68 | 0.2—0.6 | 34—45 | 39—42 | 20—30 |
| 11 | IV | 68 | 2—6 | 43—45 | 39—42 | 4000—4300 |
| 11C | IV | 68 | 0.2—0.4 | 29—45 | 39—42 | 40—50 |

* Type B
** The coating solution containing the perfluoropolyether monomer also containing 1 part benzilidimethylketal photoinitiator per 99 parts of said monomer.

**Claims**

1. A substrate having a liner character in that said liner is a composite liner comprising
an inner adherent layer of polymer made from polymerizable, film-forming monomer having a polymerization functionality greater than 1 and insoluble in methyl ethyl ketone at 20°C, and
an outer layer of polymer made from a polymerizable film-forming monomer copolymerizable with the monomer used to make said inner layer and consisting of perfluoropolyether segments which comprise a plurality of $C_aF_{2a}O$— repeating units, where a is independently in each such unit an integer from 1 to 4 which polymer is insoluble in 1,1,2-trichloro-2,2,1-trifluoroethane at 20°C, the perfluoropolyether segments making up at least 75 weight per cent of the outer layer.

2. A substrate as defined in claim 1 further characterised by the feature that said perfluoropolyether segment is

$$-CF_2O(CF_2CF_2O)_m(CF_2O)_nCF_2-$$

wherein m and n denote randomly distributed units, and the ratio m/n is 0.2/1 to 5/1.

3. A substrate as defined in claim 1 further characterised by the feature that said number average molecular weight is 500 to 20,000.

4. A substrate as defined in claim 1 in the form of a pressure-sensitive tape comprising a flexible web having a pressure-sensitive adhesive layer adjacent the face of the web opposite to the face carrying said liner, the web being wound upon itself in roll form and said liner serving as a low-adhesion backsize coating.

5. A substrate as defined in claim 1 further characterized by the feature that said liner is composite, adherent, cohesive liner having low surface energy, and comprising

an inner layer of insoluble polymer made from film-forming monomer having at least two polymerizable groups, and

an outer layer of insoluble polymer made of film-forming monomer copolymerizable with said monomer of said inner layer and comprising a perfluoro-polyether segment of the formula

$$-CF_2O(CF_2CF_2O)_m(CF_2O)_nCF_2-$$

wherein m and n denote randomly distributed repeating units and the ratio m/n is 0.2/1 to 5/1; the number average molecular weight of said segment being 800 to 10,000.

6. A substrate according to any one of claims 1 to 5 characterised in that said substrate is a flexible plastics film having said liners and a layer of aggressively tacky poly(dimethylsiloxane) adhesive.

7. Method of making the article of claim 1 characterized by the steps comprising

(a) coating onto the substrate a first dilute solution of polymerizable, film-forming monomer having a polymerizable functionality greater than 1 to provide an inner coating,

(b) coating over the coating of step (a) a second dilute solution of a polymerizable, film-forming, monomer copolymerizable with the monomer of said first solution and comprising a perfluoropolyether segment which comprises a plurality of $-C_aF_{2a}O-$ repeating units, where subscript a is independently in each such unit an integer from 1 to 4, thus providing an outer coating,

(c) drying said coatings and polymerizing said monomers.

8. Method as defined in claim 7 further characterized by the feature that said coating step (a) is followed by drying to provide a dry inner coating before coating step (b).

9. Method as defined in claim 8 further characterized by the feature that the inner coating is partially polymerized before coating step (b).

10. Method as defined in claim 7 further characterized by the feature that coating steps (a) and (b) are essentially simultaneous.

11. Method as defined in claim 7 further characterized by the feature that the perfluoropolyether monomer has acryloyl groups and step (c) involves ultraviolet irradiation.

12. Method as defined in claim 11 further characterized by the feature that the irradiation is carried out in an inert atmosphere.

13. Method as defined in claim 7 further characterized by the feature that at least one part of the polyethylenically-unsaturated monomer is coated out in step (a) per one part by weight of the perfluoro-polyether coated out in step (b).

14. Method as defined in claim 7 further characterized by the feature that the perfluoropolyether monomer has a functonality of 1.5 to 2.0.

15. Method as defined in claim 7 further characterized by the feature that said polyfluoropolyether monomer has the formula

$$Q-(C_aF_{2a}O)_kC_aF_{2a}-Z$$

wherein Q comprises a polymerizable functional group attached to a chain of k randomly connected $-C_aF_{2a}O-$ units, where subscript a is independently in each such unit an integer of 1 to 4, and Z is $-OC_aF_{2a+1}$ or Q.

**Patentansprüche**

1. Mit einer Abdeckung versehenes Substrat, dadurch gekennzeichnet, daß die Abdeckung einer Verbundabdeckung ist, die umfaßt

eine anhaftende innere Schicht aus einer Polymer, das aus einem polymerisierbaren filmbildenden Monomer hergestellt ist, dessen Polymerisationsfunktionalität größer ist als 1 und das in Methylethylketon bei 20°C unlöslich ist, und

eine äußere Schicht aus einem Polymer, das aus einem polymierisierbaren filmbildenden Monomer hergestellt ist, das mit dem zum Herstellen der inneren Schicht verwendeten Monomer copolymerisierbar ist und das aus Perfluorpolyethersegmenten besteht, die eine Mehrzahl von wiederkehrenden Einheiten $-C_aF_{2a}O-$ besitzen, wobei a in jeder Einheit unabhängig von den anderen eine ganze Zahl von 1 bis 4 ist,

dieses Polymer in 1,1,2-Trichlor-2,2,1-trifluorethan bei 20°C unlöslich ist und die äußere Schicht zu mindestens 75 Gew.% aus der äußeren Schicht besteht.

2. Substrat nach Anspruch 1, dadurch gekennzeichnet, daß das Perfluorpolyethersegment aus

$$-CF_2O(CF_2CF_2O)_m(CF_2O)_nCF_2-$$

besteht, wobei m und n Einheiten in zufälliger Verteilung bezeichnen und das Verhältnis m/n 0,2/1 bis 5/1 beträgt.

3. Substrat nach Anspruch 1, dadurch gekennzeichnet, daß das zahlenmäßig durchschnittliche Molekulargewicht der Segmente 500 bis 20 000 beträgt.

4. Substrat nach Anspruch 1 in Form eines Haftklebebandes mit einer flexiblen Materialbahn, die im bereich jener Fläche der Materialbahn, die der mit der Abdeckung versehenen Fläche entgegengesetzt ist, mit einer Haftkleberschicht versehen ist, wobei die Materialbahn auf sich selbst zu einer Rolle aufgewickelt ist und die abdeckung als ein schwach haftender rückseitiger Überzug dient.

5. Substrat nach Anspruch 1, dadurch gekennzeichnet, daß die Abdeckung eine anhaftende und kohäsive Verbundabdeckung mit geringer Oberflächenenergie ist und umfaßt

eine innere Schicht aus einem unlöslichen Polymer, das aus einem filmbildenden Monomer mit mindestens zwei polymerisierbaren Gruppen hergestellt ist, und

eine äußere Schicht aus einem unlöslichen Polymer, das aus einem filbildenden Monomer hergestellt ist, das mit einem Monomer der inneren Schicht copolymerisierbar ist und ein Perfluorpolyethersegment der Formel

$$-CF_2O(CF_2CF_2O)_m(CF_2O)_nCF_2-$$

besitzt, in der m und n wiederkehrende Einheiten in zufälliger Verteilung bezeichnen, das Verhältnis m/n 0,2/1 bis 5/1 beträgt und das zahlenmäßig durchschnittliche Molekulargewicht der Segmente 800 bis 10 000 beträgt.

6. Substrat nach einem der Ansprüche 1 bis 5, dadurch gekennzeichnet, daß das Substrat ein flexibler Kunststoffilm ist, der mit der genannten Abdeckung und einer Schicht aus stark klebrigem Poly(dimethylsiloxan)-Klebstoff versehen ist.

7. Verfahren zum Herstellen des Gegenstandes des Anspruchs 1, gekennzeichnet durch folgende Schritte

(a) zur Bildung eines inneren Überzuges wird auf das Substrat eines erste verdünnte Lösung eines polymerisierbaren Monomers aufgetragen, dessen polymerisierbare Funktionalität größer ist als 1,

(b) zur Bildung eines äußeren Überzuges wird auf den im Schritt (a) gebildeten Überzug eine zweite verdünnte Lösung eines polymerisierbaren filmbildenden Monomers aufgetragen, das mit dem Monomer der ersten Lösung copolymerisierbar ist und ein Perfluorpolyethersegment besitzt, das eine Mehrzahl von wiederkehrenden Einheiten $-C_aF_{2a}O-$ enthält wobei der Index a in jeder Einheit unabhängig von den anderen eine ganze Zahl von 1 bis 4 ist,

(c) die Überzüge werden getrocknet und die Monomere werden polymerisiert.

8. Verfahren nach Anspruch 7, dadurch gekennzeichnet, daß nach dem Überzugsschritt (a) getrocknet und dadurch ein trockener innerer Überzug vor dem Überzugsschritt (b) gebildet wird.

9. Verfahren nach Anspruch 8, dadurch gekennzeichnet, daß der innere Überzug vor dem Überzugsschritt (b) teilpolymerisiert wird.

10. Verfahren nach Anspruch 7, dadurch gekennzeichnet, daß die Überzugsschritte (a) und (b) im wesentlichen gleichzeitig durchführt werden.

11. Verfahren nach Anspruch 7, dadurch gekennzeichnet, daß das Perfluorpolyethermonomer Acryloylgruppen besitzt und in dem Schritt (c) eine Ultraviolettbestrahlung durchgeführt wird.

12. Verfahren nach Anspruch 11, dadurch gekennzeichnet, daß die Bestrahlung in einer Inertatmosphäre durchgeführt wird.

13. Verfahren nach Anspruch 7, dadurch gekennzeichnet, daß im Schritt (a) pro Gewichtsteil des im Schritt (b) aufgetragenen Perfluorpolyethers mindestens ein Gewichtsteil eines polyethylenisch ungesättigten Monomers aufgetragen wird.

14. Verfahren nach Anspruch 7, dadurch gekennzeichnet, daß das Perfluorpolyethermonomer eine Funktionalität von 1,5 bis 2,0 besitzt.

15. Verfahren nach Anspruch 7, dadurch gekennzeichnet, daß das Polyfluorpolyethermonomer die Formel

$$Q-(C_aF_{2a}O)_kC_aF_{2a}-Z$$

hat, in der Q mindestens teilweise aus einer polymerisierbaren funktionellen Gruppe besteht, die an eine Kette aus k zufällig verbundenen Einheiten $-C_aF_{2a}O-$ angelagert ist, wobei in jeder dieser Einheiten der Index a eine ganze Zahl von 1 bis 4 ist und wobei Z $-OC_aF_{2a+1}$ oder Q ist.

**Revendications**

1. Support comportant une doublure, caractérisé en ce que cette doublure est une doublure composite comprenant:

— une couche adhérente interne de polymère formé d'un monomère filmogène polymérisable ayant une fonctionnalité de polymérisation supérieure à 1 et insoluble dans la méthyl éthyl cétone à 20°C, et

— une couche externe de polymère formé d'un monomère filmogène polymérisable, copolymérisable avec le monomère utilisé pour préparer la couche interne susdite et consistant en segments de perfluoropolyéther qui comprennent une série de chaînons de $—C_aF_{2a}O—$, où *a* a indépendamment, dans chaque chaînon, une valeur de 1 à 4, ce polymére étant insoluble dans le 1,1,2-trichloro-2,2,1-trifluoréthane à 20°C, les segments de perfluoropolyéther constituant au moins 75% en poids de la couche externe.

2. Support suivant la revendication 1, caractérisé en outre en ce que le segment susdit de perfluoropolyéther est représenté par:

$$—CF_2O(CF_2CF_2O)_m(CF_2O)_nCF_2—$$

où *m* et *n* désignent des chaînons répartis au hasard, le rapport m/n étant de 0,2/1 à 5/1.

3. Support suivant la revendication 1, caractérisé en outre en ce que le poids moléculaire numérique moyen du segment est de 500 à 20.000.

4. Support suivant la revendication 1, sous la forme d'un ruban adhérant par pression, comprenant une feuille continue flexible comportant une couche d'adhésif adhérant par pression, adjacente de la surface de la feuille continue, à l'opposé de la face portant la doublure susdite, cette feuille continue étant enroulée sur elle-même sous la forme d'un rouleau, la doublure susdite servant de revêtement d'apprêt de revers faiblement adhérent.

5. Support suivant la revendication 1, caractérisé en outre en ce que la doublure susdite est une doublure composite, adhérente, cohésive, présentant une faible énergie superficielle, et comprenant:

— une couche interne de polymère insoluble constitué d'un monomère filmogène comportant au moins deux groupes polymérisables, et

— une couche externe de polymère insoluble, constitué d'un monomère filmogéne copolymérisable avec le monomère susdit de la couche interne et comprenant un segment de perfluoropolyéther de la formule:

$$—CF_2O(CF_2CF_2O)_m(CF_2O)_nCF_2—$$

dans laquelle *m* et *n* désignent des chaînons répartis de façon désordonnée et le rapport m/n est de 0,2/1 à 5/1, le poids moléculaire numérique moyen de ce segment étant de 800 à 10.000.

6. Support suivant l'une quelconque des revendications 1 à 5, caractérisé en ce qu'il est constitué par une pellicule en matière plastique flexible comportant les doublures susdites et une couche d'adhésif fortement collant de poly(diméthylsiloxane).

7. Procédé de préparation de l'objet suivant la revendication 1, caractérisé par les phases suivantes:

(a) l'application, sur le support, d'une première solution diluée d'un monomère filmogène polymérisable, ayant une fonctionnalité de polymérisation supérieure à 1 pour former un revêtement interne,

(b) l'application, sur le revêtement de la phase (a), d'une seconde solution diluée d'un monomère filmogène polymérisable, copolymérisable avec le monomère de la première solution et comprenant un segment de perfluoropolyéther qui comporte une série de chaînons $—C_aF_{2a}O—$, où *a* représente indépendamment, dans chaque chaînon, un nombre entier de 1 à 4, pour former ainsi un revêtement externe,

(c) le séchage des revêtements susdits et la polymérisation des monomères.

8. Procédé suivant la revendication 7, caractérisé en outre en ce que la phase d'application (a) est suivie par un séchage pour former un revêtement interne sec avant la phase d'application (B).

9. Procédé suivant la revendication 8, caractérisé en outre en ce que le revêtement interne est partiellement polymérisé avant la phase d'application (b).

10. Procédé suivant la revendication 7, caractérisé en outre en ce que les phases d'application (a) et (b) sont essentiellement simultanées.

11. Procédé suivant la revendication 7, caractérisé en outre en ce que le monomère de perfluoropolyéther comporte des groupes d'acryloyle, et la phase (c) comporte une irradiation ultraviolette.

12. Procédé suivant la revendication 11, caractérisé en outre en ce que l'irradiation est réalisée dans une atmosphère inerte.

13. Procédé suivant la revendication 7, caractérisé en outre en ce qu'au moins une partie du monomère polyéthyléniquement insaturé est appliquée dans la phase (a) par partie en poids du perfluoropolyéther appliqué dans la phase (b).

14. Procédé suivant la revendication 7, caractérisé en outre en ce que le monomère de perfluoropolyéther a une fonctionalité de 1,5 à 2,0.

15. Procédé suivant la revendication 7, caractérisé en outre en ce que le monomére de perfluoropolyéther répond à la formule:

$$Q—(C_aF_{2a}O)_kC_aF_{2a}—Z$$

dans laquelle Q comprend un groupe fonctionnel polymérisable attaché à une chaîne de *k* maillons $—C_aF_{2a}O—$ reliés de façon désordonnée, où *a* a indépendamment, dans chaque chaînon, une valeur de 1 à 4, et Z représente $—OC_aF_{2a+1}$ ou Q.